# EUROPEAN PATENT APPLICATION

(11) **EP 3 715 589 A1**
(43) Date of publication of application: **30.09.2020**
(21) Application number: 20162683.5
(22) Date of filing: 12.03.2020
(51) Int. Cl.: F01D 25/16, F01D 25/18, B05D 5/08, F01D 25/00, F02C 7/06

(54) **GAS TURBINE BEARING CHAMBER**

(30) Priority: 25.03.2019 GB 201904079
(71) Applicant: Rolls-Royce plc, London N1 9FX (GB)
(72) Inventor: Mason, David, Derby, Derbyshire DE24 8BJ (GB); Howard, Joe, Derby, Derbyshire DE24 8BJ (GB)
(74) Representative: Rolls-Royce plc

(57) **Abstract**

There is disclosed a bearing chamber apparatus for a gas turbine engine comprising: a housing defining a bearing chamber for containing lubricant, the housing comprising an inner wall facing the bearing chamber; and wherein the inner wall comprises an oleophobic surface. A method is also disclosed, comprising: providing a bearing chamber apparatus for a gas turbine engine, the bearing chamber apparatus comprising a housing defining a bearing chamber for containing lubricant, the housing comprising an inner wall facing the bearing chamber, forming an oleophobic surface on the inner wall. A gas turbine engine for an aircraft comprising a bearing chamber apparatus is also disclosed.

## Description

The present disclosure relates to a bearing chamber apparatus for a gas turbine engine, comprising a housing defining a bearing chamber for containing lubricant.

A typical gas turbine for aircraft propulsion comprises an axial fan driven by an engine core. The engine core is generally made up of one or more turbines which drive respective compressors via coaxial shafts. A low pressure turbine drives a low pressure shaft, which drives a fan (or low pressure compressor), such that the fan rotates at the same speed as the low pressure turbine. In a geared turbofan, a gearbox is provided between the fan and the low pressure turbine, such that the fan and the low pressure turbine are able to rotate at different speeds.

In a typical gas turbine engine, bearing arrangements are provided to allow movement between various components of the engine, such as between the high pressure and intermediate pressure turbines. The bearings are lubricated by lubricant (or oil) which is located within a bearing chamber. At high temperatures, the lubricant undergoes coking in the bearing chamber, which can reduce the effectiveness of the bearing.

It may therefore be desirable to provide an improved arrangement.

According to a first aspect there is provided a bearing chamber apparatus for a gas turbine engine comprising: a housing defining a bearing chamber for containing lubricant (oil), the housing comprising an inner wall facing the bearing chamber; wherein the inner wall comprises an oleophobic surface.

The oleophobic surface may be such that the apparent contact angle of a drop of lubricant on the solid surface is greater than 90°. The oleophobic surface may have a low wettability of the lubricant on the surface. The oleophobic surface may repel the lubricant. The oleophobic surface may also be referred to as oil-phobic, oil repellent, lubricant repellent or an oil/lubricant control surface. During operation of the bearing chamber apparatus, the contact surface area between the inner wall and the lubricant may be reduced, such that heat transfer from the inner wall to the lubricant is reduced. Reducing the heat transfer from the inner wall to the lubricant may reduce coking of the lubricant. As coking of the lubricant may "gum up" or obstruct bearings and their seals, it may reduce their efficiency and lifespan. Reducing the heat transfer from the inner wall to the lubricant may reduce the mass flow rate required for the lubricant, and/or reduce the running temperature of the lubricant. After shutdown of the bearing chamber apparatus, the oleophobic surface may reduce the amount of lubricant remaining on the inner wall, and therefore reduce the coking of the lubricant on the inner wall. Coking on the inner wall may be dislodged into the bearing and its seals and cause damage. As such, the oleophobic surface may improve the efficiency and lifespan of the bearing and its seals. The bearing chamber may be a high pressure-intermediate pressure bearing chamber of an engine. The bearing chamber may be any other bearing chamber or captive oil structure of an engine.

The inner wall may be formed of a metal or alloy. The inner wall may be formed of Inconel 718, or other steels or aluminium alloys.

The oleophobic surface may comprise a surface topography (or texture) which increases the oleophobicity of the surface. The surface topography may increase the apparent contact angle of the drop of lubricant on the surface. The surface topography may increase the oleophobicity of the surface by increasing the roughness. The surface topography may reduce the wettability of the surface. The reduction of the wettability of the surface may be such that an apparent contact angle between the lubricant and a surface with a surface energy greater than the surface energy of the lubricant can be greater than 90°. The reduction of the wettability of the surface may be such that a surface with a surface energy greater than the surface energy of the lubricant can be oleophobic. The oleophobic surface may be formed by additive manufacture. The oleophobic surface may be formed in the same additive manufacture process as the inner wall, which may result in an efficient manufacture process. The oleophobic surface and inner wall may be designed with Computer Aided Design (CAD). The oleophobic surface may be formed by etching, laser etching or machining.

The oleophobic surface may comprise a surface coating which has been applied to the inner wall. The surface coating may be a different material to the inner wall of the bearing housing. The applied surface coating may have a low surface energy. The applied surface coating may have a surface energy which is lower than the surface energy of the lubricant. The surface coating may comprise a surface topography which increases the oleophobicity of the surface. The surface coating may be applied by spraying, painting or spin coating the coating onto the inner wall.

The surface topography may comprise features such as continuous gratings, non-continuous gratings, repeating cylinders, conical frusta, inverted conical frusta and/or fins. The surface topography may comprise a repeating pattern, optionally a repeating pattern of one or more of the structures mentioned in the previous sentence. The surface topography may comprise repeating pattern which repeats in two dimensions. The surface topography may comprise a staggered repeating pattern.

The dimensions of the features may be on a nanoscale. The dimensions of the features may be on a micron scale.

The surface topography may comprise a re-entrant structure or re-entrant structures. A re-entrant structure may comprise a structure in which a normal of a peripheral surface of the structure is at an angle between 90-180° to the normal of the general surface plane. Relative to the general surface plane, a re-entrant structure may include surfaces that are at an angle greater than 90°. The perpendicular axis of a re-entrant surface may intersect with the general surface plane. A re-entrant structure may comprise a structure in which a distal portion of the structure overhangs a proximal portion of the structure.

The inner wall may comprise a first region and a second region, the surface topography may be different in the first region and the second region such that the first region is more oleophobic than the second region. The surface topography may be different in the first region and the second region such that the first region is less wettable than the second region. The apparent contact angle of the lubricant on the inner wall may be greater in the first region than the second region. The first region may be oleophobic and the second region may be oleophilic. The first region may repel the lubricant and the second region may wick the lubricant. The apparent contact angle of the lubricant on the inner wall in the second region may be below 90°. The surface topography may be designed so as to directionally wick lubricant away from or to a desired location. The surface topography may be varied across the surface of the inner wall. The variation of the surface topography may enable control of the lubricant wetting on the surface. The variation of the surface topography may provide be designed so as to control the flow of the lubricant across the surface.

The first region may be located proximate to or near a seal of the bearing chamber, such that lubricant near the seal is repelled away from the seal. The second region may be located distant or away from a seal of the bearing chamber.

According to an additional aspect there is provided a method comprising providing a bearing chamber apparatus for a gas turbine engine, the bearing chamber apparatus comprising a housing defining a bearing chamber for containing lubricant, the housing comprising an inner wall facing the bearing chamber, and forming an oleophobic surface on the inner wall.

The step of forming an oleophobic surface on the inner wall may comprise forming a surface topography on the inner wall. The method may comprise the application of a coating to the surface by spraying, painting or spin coating. The applied surface coating may have a low surface energy. The applied surface coating may have a surface energy which is lower than the surface energy of the lubricant. The surface coating may comprise a surface topography which increases the oleophobicity of the surface.

The method may comprise additive manufacture of the oleophobic surface. The method may alternatively comprise etching, laser etching or machining of the surface.

The step of providing a bearing chamber apparatus may comprise additive manufacture of the bearing chamber. The oleophobic surface may be formed in the same additive manufacture process as the inner wall, which may result in an efficient manufacture process. The oleophobic surface and inner wall may be designed with Computer Aided Design (CAD).

The step of providing a bearing chamber apparatus may comprise providing a pre-made bearing chamber apparatus. The pre-made bearing chamber apparatus may be an existing bearing chamber to which the surface topography may be retrofit.

According to an additional aspect there is provided a gas turbine engine for an aircraft comprising an engine core comprising a turbine, a compressor, and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft, and a bearing chamber in accordance with any of the statements above.

The turbine may be a first turbine, the compressor may be a first compressor, and the core shaft may be a first core shaft; the engine core may further comprise a second turbine, a second compressor, and a second core shaft connecting the second turbine to the second compressor; and the second turbine, second compressor, and second core shaft may be arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Utip. The work done by the fan blades 13 on the flow results in an enthalpy rise dH of the flow. A fan tip loading may be defined as dH/Utip2, where dH is the enthalpy rise (for example the 1-D average enthalpy rise) across the fan and Utip is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg-1K-1/(ms-1)2). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg-1s, 105 Nkg-1s, 100 Nkg-1s, 95 Nkg-1s, 90 Nkg-1s, 85 Nkg-1s or 80 Nkg-1s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a cross-sectional view of a bearing apparatus for a gas turbine engine;
Figure 5 is a schematic view of a liquid drop on a solid surface;
Figures 6a-6l show various surface topographies for an inner wall of a housing of a bearing apparatus;
Figure 7 is a schematic view of a re-entrant structure;
Figures 8a-8b show a surface coating applied to the inner wall;
Figure 9 shows a variation in surface topography across the inner wall;
Figure 10 shows a method of manufacturing a bearing chamber apparatus, and forming an oleophobic surface on the inner wall of a housing of a bearing chamber of the bearing chamber apparatus; and
Figure 11 shows a method of providing a bearing chamber apparatus, and forming an oleophobic surface on the inner wall of a housing of a bearing chamber of the bearing chamber apparatus.

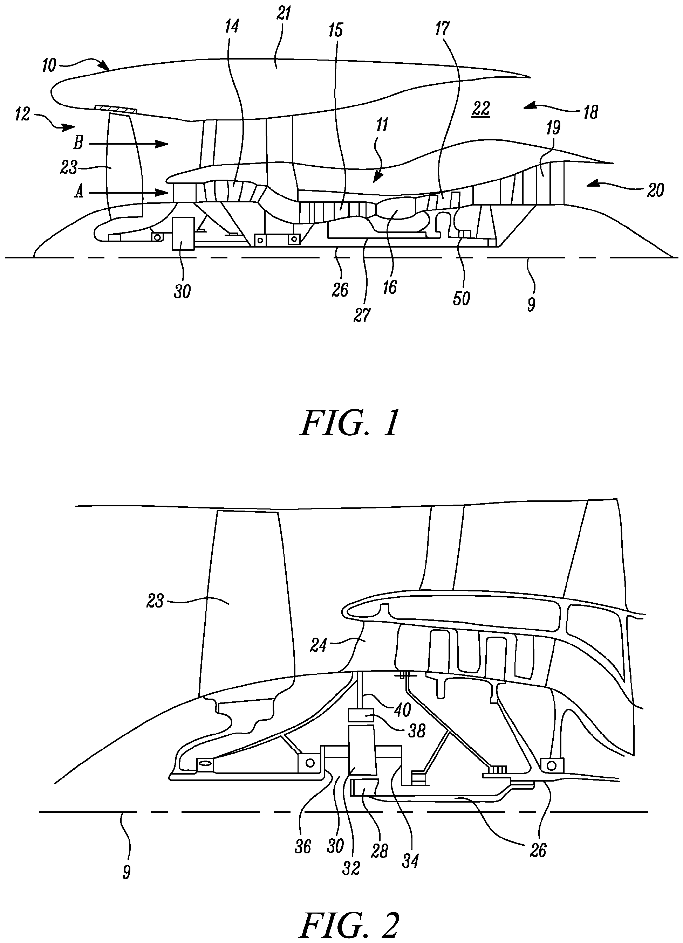

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

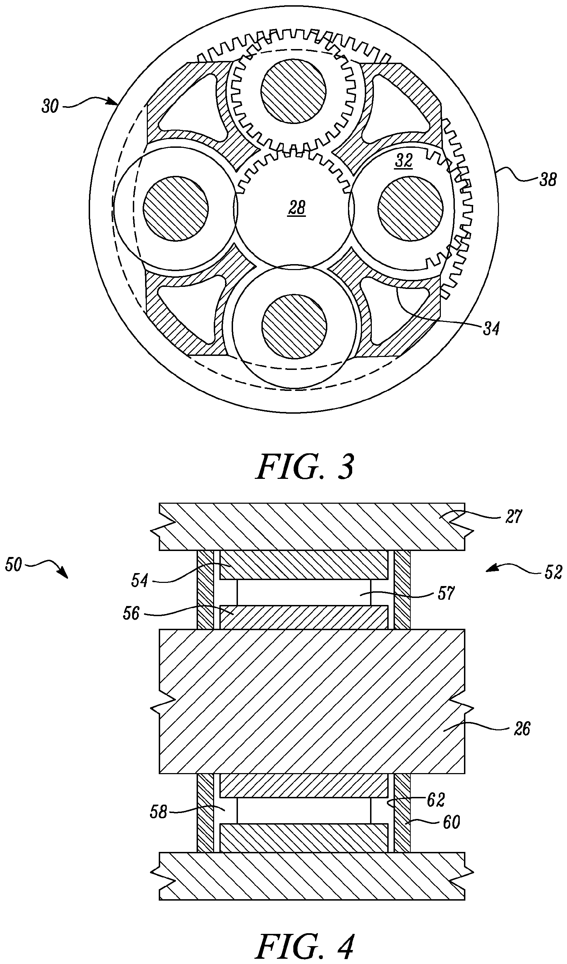

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Referring back to Figure 1, a bearing arrangement 50 is shown in a gas turbine engine 10. The bearing arrangement 50 in this example is configured to allow rotation between the high pressure shaft 27 and the intermediate (or low) pressure shaft 26, but it should be understood that the bearing arrangement 50 could be utilised elsewhere in the engine 10. Turning to Figure 4, the bearing arrangement 50 comprises a roller bearing 52 arranged between the high pressure shaft 27 and the intermediate pressure shaft 26. The roller bearing 52 comprises an outer race 54 which is attached to the high pressure shaft 27, an inner race 56 which is attached to the low pressure shaft 26, and a plurality of rollers 57. It will be understood that the bearing arrangement 50 could be located in any part of the engine where a bearing is required. The bearing arrangement 50 further comprises a bearing chamber 58 in which lubricant is contained, so as to lubricate the bearing 52. The bearing chamber 58 is defined by a housing 60, which has an inner wall 62 facing the bearing chamber 58. The inner wall 62 comprises an oleophobic surface.

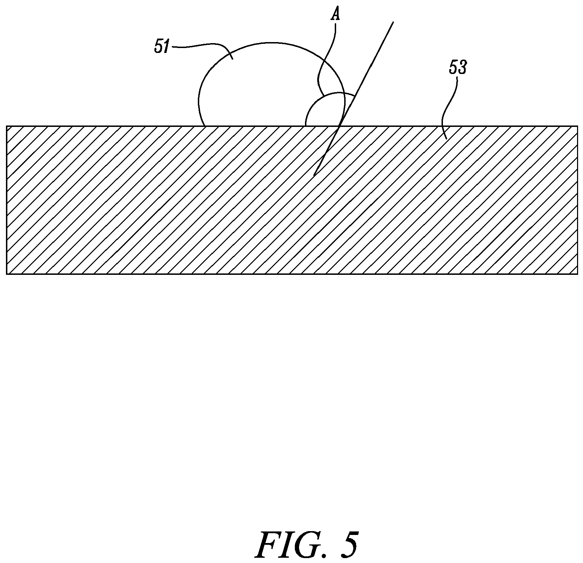

In general, it will be understood that when a drop of liquid 51 is in contact with a solid 53, as shown in Figure 5, an apparent contact angle A is defined as the angle (measured through the liquid) between the apparent solid surface and a tangent to the liquid drop where it meets the solid surface. It will further be understood that an oleophobic surface comprises a surface on which an oil (or lubricant) droplet will have an apparent contact angle of greater than 90°, and that as the contact angle increases, the surface can be said to be increasing in oleophobicity. Factors which affect the apparent contact angle include, but are not limited to, the surface energy of the solid, the surface energy (or tension) of the liquid, and the roughness of the solid surface.

In one embodiment, the oleophobic surface comprises a surface topography which causes the inner wall 62 to repel lubricant.

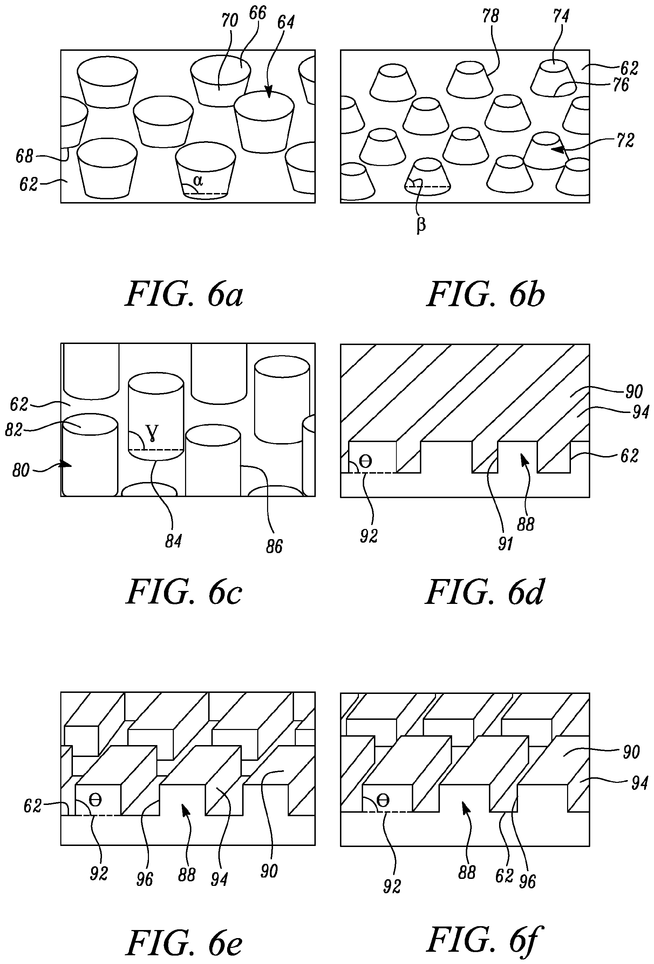

Various embodiments of the surface topography are shown in Figures 6a-d. Each of the embodiments comprises an array of regular repeating units, each of which projects from the surface of the inner wall 62.

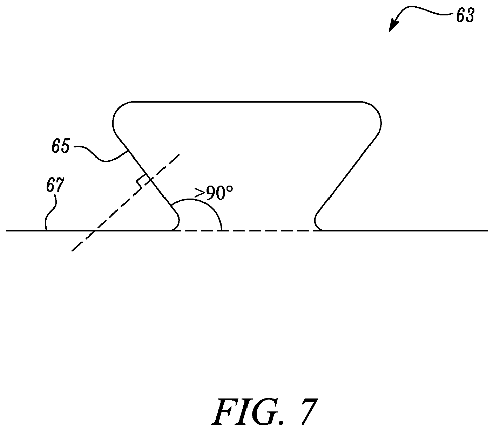

In a first embodiment, shown in Figure 6a, the surface topography comprises a repeating unit comprising an inverted conical frustum 64 . The repeating unit is repeated across the surface of the inner wall 62, in this example in two orthogonal directions. The inverted conical frustum 64 comprises a circular upper surface 66 at a distal portion thereof which is parallel to the surface of the inner wall 62, and a circular lower boundary 68 at the proximal portion, where the inverted conical frustum 64 is contiguous with the inner wall 62. The upper surface 66 has a larger diameter than the lower boundary 68, such that a peripheral surface or side wall 70 of the frustum 64 slopes inwardly towards the lower boundary 68. The side wall 70 of the frustum 64 forms an angle α of over 90° with surface of the inner wall 62 and the upper surface 66, such that an overhang, or re-entrant angle (or re-entrant structure) is formed. An example re-entrant structure is shown in Figure 7. A re-entrant structure 63 comprises a structure in which a normal of a peripheral surface 65 of the structure 63 is at an angle between 90-180° to the normal of the general surface plane 67. Relative to the general surface plane 67, a re-entrant structure includes surfaces that are at an angle greater than 90°. The perpendicular axis of a re-entrant surface intersects with the general surface plane. The re-entrant angle increases the oleophobic effect of the surface topography.

In a second embodiment, shown in Figure 6b, the surface topography comprises a repeating unit comprising a conical frustum 72. The repeating unit is repeated in two directions across the surface of the inner wall 62. The conical frustum 72 comprises a circular upper surface 74 which is parallel to the surface of the inner wall 62, and a circular lower boundary 76 at which the conical frustum 72 is contiguous with the inner wall 62. The upper surface 74 has a smaller diameter than the lower boundary 76, such that a peripheral surface or side wall 78 of the frustum 72 slopes outwardly towards the lower boundary 76. The side wall 78 of the frustum 72 forms an angle β of under 90° with surface of the inner wall 62 and the upper surface 74.

In a third embodiment, shown in Figure 6c, the surface topography comprises a repeating unit comprising a cylinder (or column) 80. The repeating unit is repeated in two directions across the surface of the inner wall 62. The cylinder 80 comprises a circular upper surface 82 which is parallel to the surface of the inner wall 62, and a circular lower boundary 84 at which the cylinder 80 is contiguous with the inner wall 62. The upper surface 82 and the lower boundary 84 have the same diameter, such that the side wall 86 of the cylinder is perpendicular to the upper surface 82, the lower boundary 84 and the surface of the inner wall 62. The side wall 86 forms an angle γ of 90° with the surface of the inner wall 62 and the upper surface 82.

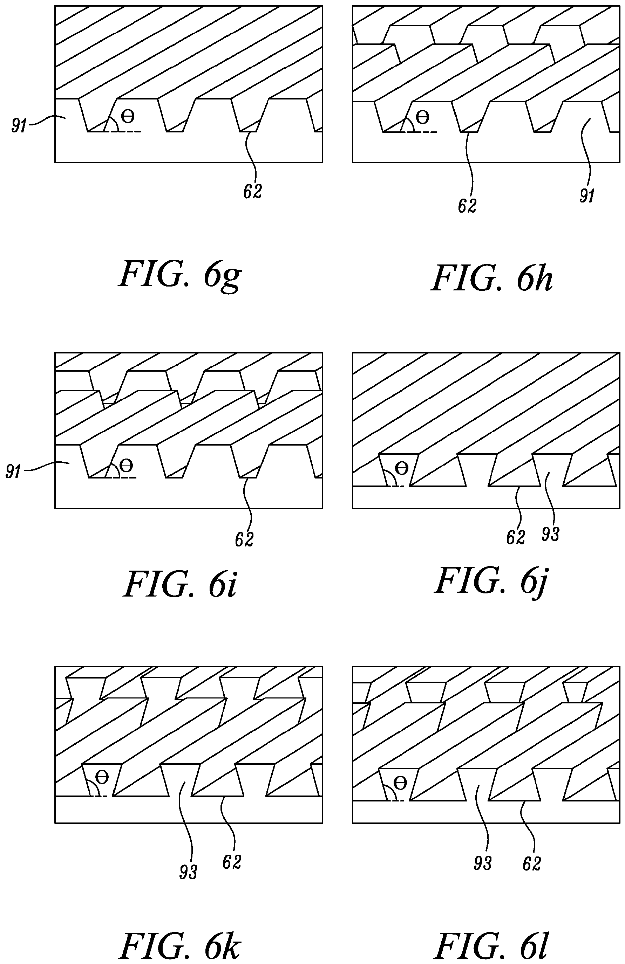

In a fourth embodiment, shown in Figure 6d, the surface topography comprises a repeating unit comprising a cuboid 88. It will be understood that the cuboid 88 may be a cube. The repeating unit is repeated in one direction across the surface of the inner wall 62. This surface topography may be described as a continuous grating. In other embodiments, the repeating unit may be repeated in two directions across the surface of the inner wall 62, which may be described as fins, or a non-continuous grating. These fins (or non-continuous grating) may be in-line (Figure 6e) or staggered (Figure 6f). The cuboid 88 comprises a rectangular upper surface 90 which is parallel to the surface of the inner wall 62, and a rectangular lower boundary 92 at which the cuboid 88 is contiguous with the inner wall 62. The cuboid 88 has two side walls 94, 96 which are perpendicular to the upper surface 90, the lower boundary 92 and the surface of the inner wall 62, such that the side walls 94 form an angle θ of 90° with the surface of the inner wall 62, and the upper surface 90. In other embodiments, this angle θ may be lower than 90°, so as to form a trapezoidal prism grating 91,. The trapezoidal prism grating may be continuous (Figure 6g), non-continuous in-line (Figure 6h), or non-continuous staggered (Figure 6i). In yet further embodiments, the angle θ may be greater than 90°, so as to form an inverted trapezoidal prism grating 93 with a re-entrant angle and increase the oleophobic effect. The inverted trapezoidal prism grating may be continuous (Figure 6j), non-continuous in-line, (Figure 6k) or non-continuous staggered (Figure 6l).

In addition to the embodiments discussed above, there may be other embodiments in which an angle between an upper surface and a side wall forms a re-entrant angle and increases the oleophobic effect of the surface topography.

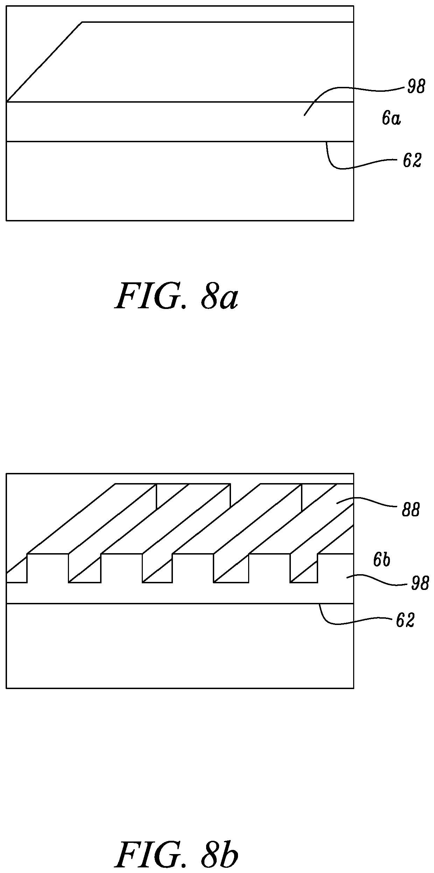

In the embodiments described above, the inner wall 62 comprises an oleophobic surface which comprises a surface topography that causes the inner wall 62 to repel lubricant. In another embodiment, shown in Figure 8a, the oleophobic surface comprises an applied coating 98 with a low surface energy, such that the inner wall 62 repels lubricant. The applied coating 98 comprises a material with a surface energy that is lower than the surface energy of the lubricant. The applied coating 98 is applied to the inner wall 62 by spraying, painting or spin coating.

As shown in Figure 8b, the oleophobic surface may comprise an applied coating 98 and a surface topography as described above, so as to increase the oleophobic effect. Although a grating-type topography is shown in Figure 6b, it should be understood that any such oleophobic surface topography could be used.

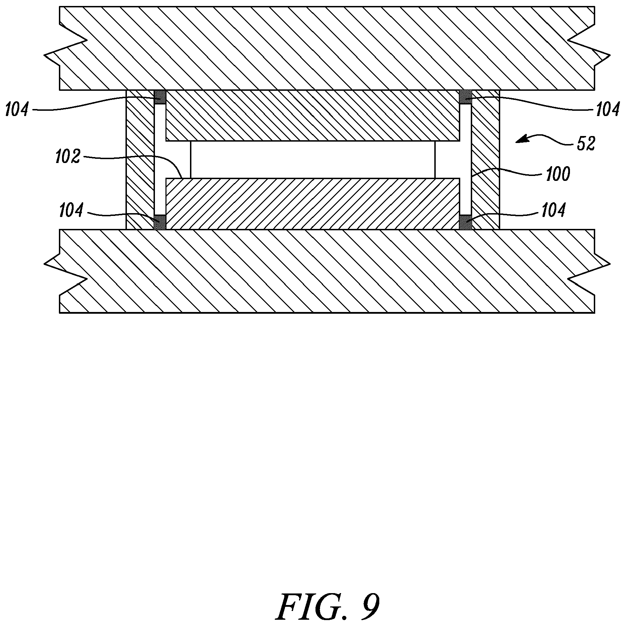

In a further embodiment, as shown in Figure 9, which shows an upper half of the bearing chamber apparatus 50 of Figure 4, the inner wall 62 has a first region 100, proximate to a seal 104 of the bearing chamber 58, and a second region 102, distant from the seal 104. The first region 100 is more oleophobic than the second region 102, such that the contact angle of the lubricant of the surface is greater in the first region 100 than the second region 102.

In this embodiment, the first region 100 comprises an oleophobic surface, such that the contact angle of lubricant on the surface is greater than 90°. The second region 102 comprises an oleophilic surface, such that the contact angle of lubricant on the surface is smaller than 90°. In other embodiments, the first region may comprise an oleophobic surface, such that the contact angle of lubricant on the surface is greater than 120° and the second region 102 may also comprise an oleophobic surface, such that the contact angle of lubricant on the surface is greater than 90°.

The oleophobicity of the inner wall 62 decreases gradually between the first region 100 and the second region 102. This means that the lubricant will be repelled away from the area surrounding the seal 104, and towards the second region 102. As a result, there will be less oil coking in the first region 100, which will reduce the amount of coked lubricant getting into the seal 104, resulting in a greater efficiency and/or operational life of the bearing 52.

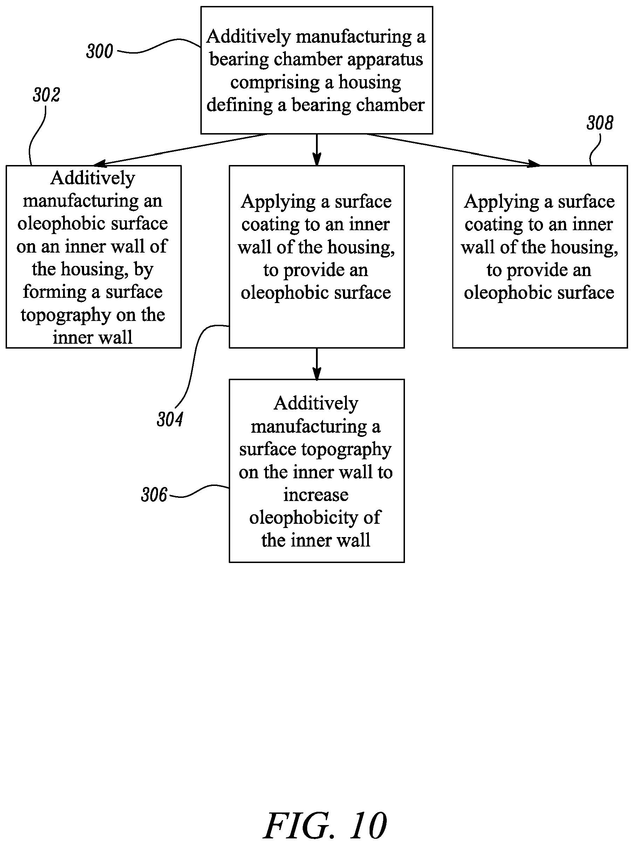

Referring now to Figure 10, a method of manufacturing a bearing chamber apparatus is shown. A design for the bearing chamber apparatus is prepared using Computer Aided Design (CAD) software. At step 300 of the method, the bearing chamber apparatus 50 is additively manufactured using the design prepared by CAD. The next stage of the additive manufacture process can comprise forming an oleophobic surface topography on an inner wall 62 of a housing 60 of the bearing chamber apparatus 50 (step 302), or applying a surface coating 98 to an inner wall 62 of the housing 60 (step 304 or 308). The surface coating 98 comprises a material which has a lower surface energy than the bearing lubricant. The step of applying a surface coating 98 to the inner wall 62 of the housing 60 may optionally be followed by forming an oleophobic surface topography on the inner wall 62 (step 306). As discussed above, the oleophobicity of the inner wall 62 may vary across the inner wall 62.

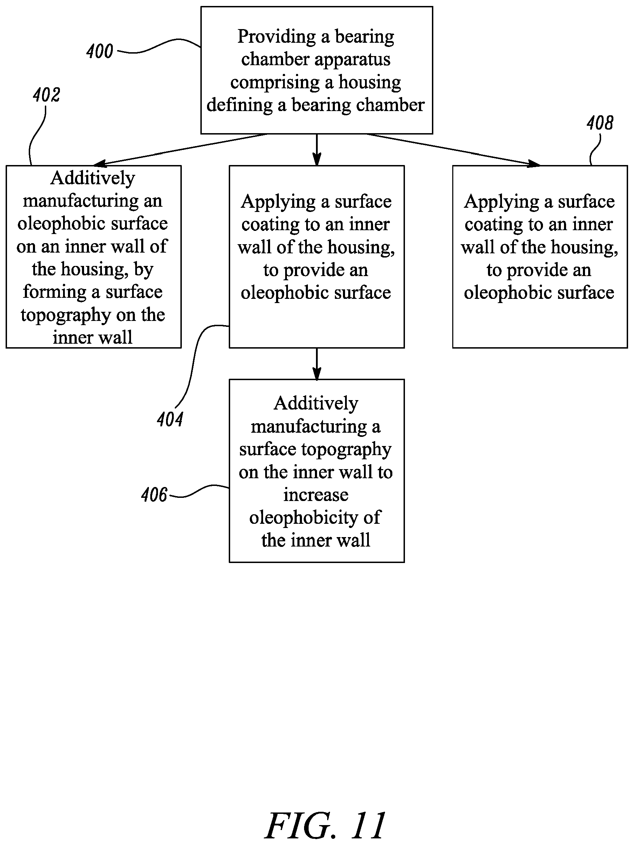

Referring now to Figure 11, an additional method of manufacturing a bearing chamber apparatus is shown. At step 400 of the method, the bearing chamber apparatus 50 is provided, for example a pre-existing bearing chamber of a gas turbine engine which does not comprise an oleophobic surface. A design for an inner wall 62 of the housing 60 is prepared using Computer Aided Design (CAD) software. Additive manufacture is then used to prepare the inner wall 62, in line with the CAD design, so as to form an oleophobic surface topography on the inner wall 62 (step 402), or apply a surface coating 98 to the inner wall 62 (step 404 or 408). The surface coating 98 comprises a material which has a lower surface energy than the bearing lubricant. The step of applying a surface coating 98 to the inner wall 62 may optionally be followed by forming an oleophobic surface topography on the inner wall 62 (step 406). As discussed above, the oleophobicity of the inner wall 62 may vary across the inner wall 62. As such, an oleophobic surface for the inner wall can be retro-fitted to a pre-existing bearing chamber.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A bearing chamber apparatus (50) for a gas turbine engine comprising:
a housing (60) defining a bearing chamber (58) for containing lubricant, the housing (60) comprising an inner wall (62) facing the bearing chamber (58);
wherein the inner wall (62) comprises an oleophobic surface.

2. A bearing chamber apparatus (50) according to claim 1, wherein the oleophobic surface comprises a surface topography which increases the oleophobicity of the surface.

3. A bearing chamber apparatus (50) according to claim 2, wherein the surface topography comprises conical frusta (72) and/or inverted conical frusta (64).

4. A bearing chamber apparatus (50) according to claim 2, wherein the surface topography comprises continuous (88) and/or non-continuous gratings.

5. A bearing chamber apparatus (50) according to any of claims 2 to 4, wherein the surface topography comprises staggered non-continuous gratings.

6. A bearing chamber apparatus (50) according to any of claims 2 to 5, wherein the surface topography comprises re-entrant structures.

7. A bearing chamber apparatus (50) according to any of claims 2 to 6, wherein the inner wall (62) comprises a first region (100) and a second region (102), the surface topography being different in the first region (100) and the second region (102) such that the first region (100) is more oleophobic than the second region (102).

8. A bearing chamber apparatus (50) according to claim 7, wherein the first region (100) is oleophobic and the second region (102) is oleophilic.

9. A bearing chamber apparatus (50) according to claim 7 or 8, wherein the first region (100) is proximate to a seal (104), and the second region (102) is distant from the seal (104).

10. A method comprising:
providing (300, 400) a bearing chamber apparatus (50) for a gas turbine engine, the bearing chamber (58) apparatus comprising a housing (60) defining a bearing chamber (58) for containing lubricant, the housing (60) comprising an inner wall (62) facing the bearing chamber (58),
forming (302, 304, 306, 308, 402, 404, 406, 408) an oleophobic surface on the inner wall (62).

11. A method according to claim 10, wherein the step of forming an oleophobic surface on the inner wall (62) comprises forming (302, 306, 402, 406) a surface topography on the inner wall (62).

12. A method according to claim 10 or 11 wherein the method comprises additive manufacture (302, 306, 402, 406) of the oleophobic surface.

13. A method according to any of claims 10 to 12, wherein the step (302, 306, 400, 402, 406) of providing a bearing chamber apparatus (50) comprises additive manufacture (300) of the bearing chamber (58).

14. A method according to any of claims 10 to 12, wherein the step (302, 306, 400, 402, 406) of providing a bearing chamber apparatus (50) comprises providing (400) a pre-made bearing chamber (58).

15. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft, and
a bearing chamber apparatus (50) in accordance with any of claims 1 to 9 above.
